# NEUE EUROPÄISCHE PATENTSCHRIFT

(11) **EP 2 247 429 B2**
(45) Veröffentlichungstag und Bekanntmachung des Hinweises auf die Entscheidung über den Einspruch: **16.09.2020**
(45) Hinweis auf die Patenterteilung: 08.01.2014
(21) Anmeldenummer: 09716999.9
(22) Anmeldetag: 02.02.2009
(51) Int. Cl.: B29C 49/78, B29C 49/12, B29C 49/06

(54) **VERFAHREN UND VORRICHTUNG ZUR BLASFORMUNG VON BEHÄLTERN**
METHOD AND DEVICE FOR BLOW-MOLDING CONTAINERS
PROCÉDÉ ET DISPOSITIF DE MOULAGE PAR SOUFFLAGE DE RÉCIPIENTS

(30) Priorität: 06.03.2008 DE 102008013419
(43) Veröffentlichungstag der Anmeldung: 10.11.2010
(73) Patentinhaber: KHS Corpoplast GmbH, 22145 Hamburg (DE)
(72) Erfinder: BALKAU, Karl-Heinz, 22113 Oststeinbek (DE); MATTHIESEN, Martin, 22359 Hamburg (DE); HAESENDONCKX, Frank, 22395 Hamburg (DE)
(74) Vertreter: Hausfeld, Norbert
(86) Internationale Anmeldenummer: PCT/DE2009/000150
(87) Internationale Veröffentlichungsnummer: WO 2009/109159

(56) Entgegenhaltungen:
- EP-A- 0 499 136
- WO-A-99/48669
- WO-A-03/078136
- WO-A-2006/108380
- WO-A2-2008/081109
- US-A- 3 865 530
- US-A1- 2002 011 681
- US-A1- 2005 194 705
- US-A1- 2007 290 388
- US-B1- 6 576 171
- SCHMIDT F M ET AL: "EXPERIMENTAL STUDY AND NUMERICAL SIMULATION OF THE INJECTION STRETCH/BLOW MOLDING PROCESS" POLYMER ENGINEERING & SCIENCE, WILEY, HOBOKEN, NJ, US, Bd. 38, Nr. 9, 1. September 1998 (1998-09-01), Seiten 1399-1412, XP000848893 ISSN: 0032-3888

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird.

Die Erfindung betrifft darüber hinaus eine Vorrichtung zur Blas-formung von Behältern aus einem thermoplastischen Material, die mindestens eine entlang eines Transportweges eines Vorformlings angeordnete Heizstrecke und eine mit einer Blasform versehene Blasstation aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Bei der Durchführung einer blastechnischen Behälterformung besteht eine wesentliche Aufgabe darin, in der Behälterwandung eine vorgegebene Materialverteilung zu erreichen. Ein wesentlicher Parameter zur Vorgabe der sich ergebenden Materialverteilung stellt die Verteilung der vor der Blasformung in den Vorformlingen realisierten wärmeverteilung dar.

Die Wärmeverteilung wird typischerweise derart realisiert, daß in einer Umfangsrichtung der Vorformlinge ein gleiches Temperaturniveau und in einer Längsrichtung der Vorformlinge ein Temperaturprofil erzeugt wird. Darüber hinaus erfolgt auch durch die Wand des Vorformlings hindurch von außen nach innen die Vorgabe eines geeigneten Temperaturprofils. Grundsätzlich ist davon auszugehen, daß Bereiche des Vorformlings mit einer geringeren Temperatur zu dickeren wandungsbereichen des geblasenen Behälters führen und daß die wärmeren Bereiche des Vorformlings bei der Durchführung der Blasverformung stärker verstreckt werden und hierdurch zu dünneren Wandungsbereichen des geblasenen Behälters führen.

Die Temperatur im Bereich der Vorformlinge kann mit sogenannten Pyrometern gemessen werden. Eine meßtechnische Erfassung einer konkreten Wanddicke im Bereich der geblasenen Behälter kann mit sogenannten Wanddickensensoren erfolgen, die beispielsweise optisch oder unter Verwendung von Schallwellen arbeiten.

Es zeigt sich allerdings, daß allein eine geeignete Vorgabe der Wärmeverteilung innerhalb der Vorformlinge nicht dafür ausreichend ist, optimale Materialeigenschaften im geblasenen Behälter zu erzeugen. Es liegen vielmehr vergleichsweise komplexe Wechselwirkungen zwischen der Durchführung des Reckvorganges, dem Druckaufbau innerhalb der sich entwickelnden Behälterblase der Materialverteilung im Vorformling und der Temperaturverteilung im Vorformling vor.

Aus der US 2005/194705 A1 ist es bekannt, Prozeßparameter des Blasvorganges, beispielsweise den Versorgungsdruck des Blasgases oder die Temperatur der Blasform zu messen und zu regeln.

In der WO 03/078136 A wird ebenfalls bereits die meßtechnische Erfassung und Regelung derartiger Prozeßparameter des Blasvorganges erläutert.

Die WO 2006/108380 beschreibt die Regelung eines elektrischen Linearantriebes zur Durchführung eines Reckvorganges. Es wird allerdings nicht die konkrete Reckung des Vorformlings, sondern lediglich die Position der Reckstange geregelt.

US 6,576,171 B1 offenbart ein Verfahren gemäß dem Oberbegriff des Anspruchs 1 sowie eine Vorrichtung gemäß dem Oberbegriff des Anspruchs 20.

Aufgabe der vorliegenden Erfindung ist es, ein Verfahren der einleitend genannten Art derart zu verbessern, daß mit geringem maschinenbaulichen Aufwand eine qualitativ hochwertige Blasformung bei gleichzeitig hohen Durchsatzraten unterstützt wird.

Diese Aufgabe wird mit den Merkmalen der Ansprüche 1 und 20 gelöst.

WeitereAufgabeder vorliegenden Erfindung ist es, eine Vorrichtung der einleitend genannten Art derart zu konstruieren, daß hohe Durchsatzraten bei einfachem konstruktiven Aufbau und guter Produktqualität unterstützt werden.

Diese Aufgabe wird erfindungsgemäß dadurch gelöst, daß mindestens ein Sensor zur Erfassung mindestens eines die Umformung einer sich entwickelnden Behälterblase beim Umformen des Vorformlings in den Behälter charakterisierenden Parameters an eine Steuereinrichtung angeschlossen ist, die eine Auswertungseinheit für diesen Parameter aufweist und die mindestens eine den Umformungsvorgang beeinflussende Stellgröße generiert und die in einem geschlossenen Regelkreis zur Anpassung des gemessenen Parameters an einen zugehörigen Sollwert angeordnet ist, wobei ein Anliegen einer sich entwickelnden Behälterblase an eine Innenseite der Blasform mindestens zeitweise und mindestens abschnittweise gemessen wird.

Erfindungsgemäß wurde erkannt, daß eine äußerst vorteilhafte Verfahrensdurchführung dadurch erreicht werden kann, daß nicht erst der fertig geblasene Behälter vermessen wird, sondern daß bereits innerhalb der Blasform die Entwicklung der Behälterblase überwacht wird, die bei der Umformung des Vorformlings in den Behälter entsteht. Durch die Auswertung der Entwicklung der Behälterblase und durch eine direkte Beeinflussung der diese Entwicklung beeinflussenden Parameter können die Materialeigenschaften des geblasenen Behälters wesentlich präziser und effektiver gesteuert und an gewünschte Eigenschaften angeglichen werden.

Die Erfassung eines weiteren die Blasenentwicklung kennzeichnenden Parameters ist dadurch möglich, daß eine Position der Reckstange gemessen wird.

Ebenfalls ist daran gedacht, daß eine Geschwindigkeit der Reckstange gemessen wird.

Eine weitere Variante besteht darin, daß eine Reckkraft gemessen wird.

Darüber hinaus ist es auch möglich, daß ein Blasdruck gemessen wird.

Weiterhin ist es auch möglich, daß ein Blasgasvolumen gemessen wird.

Eine definierte Einhaltung einer vorgegebenen Entwicklung der Behälterblase kann insbesondere dadurch erreicht werden, daß der Parameter entsprechend einem zeitlich veränderlichen Sollwertprofil geregelt wird.

Generell erweist es sich als zweckmäßig, daß die Anlage der Behälterblase an der Blasform geregelt wird.

Gemäß einer Ausführungsvariante ist vorgesehen, daß die Position der Reckstange geregelt wird.

Ebenfalls ist daran gedacht, daß die Geschwindigkeit der Reckstange geregelt wird.

Darüber hinaus ist es auch möglich, daß die Reckkraft geregelt wird.

Eine weitere Ausführungsvariante besteht darin, daß der Blasdruck geregelt wird.

Schließlich ist es auch möglich, daß das Blasgasvolumen geregelt wird.

Eine Beeinflussung der Blasenentwicklung kann dadurch erfolgen, daß als Stellgröße die Reckgeschwindigkeit verwendet wird.

Eine andere Ausführungsform besteht darin, daß als Stellgröße die Reckstangenposition verwendet wird.

Darüber hinaus ist daran gedacht, daß als Stellgröße die Reckkraft verwendet wird.

Gleichfalls ist es möglich, daß als Stellgröße der Blasdruck verwendet wird.

Schließlich ist es ebenfalls möglich, daß als Stellgröße das Blasgasvolumen verwendet wird.

Eine Berücksichtigung der komplexen Zusammenhänge und gegenseitigen Beeinflussungen der Einzelfaktoren kann dadurch erfolgen, daß der Meßwert einem regelungstechnischen Model zugeführt wird, das die Stellgröße generiert.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung zur Veranschaulichung des zeitlichen Verlaufes der Anlage der Behälterblase an der Innenwandung der Blasform,
- Fig. 6: Diagramme zur Veranschaulichung der Zusammenhänge zwischen dem zeitlichen Druckverlauf innerhalb des Vorformlings, der Behälterblase und des geblasenen Behälters, der Reckkraftentwicklung sowie der Reckstangenpositionierung,
- Fig. 7: eine vergrößerte teilweise Darstellung des Verlaufes gemäß Fig. 6 mit zusätzlichen Bezugslinien und
- Fig. 8: eine schematische Darstellung eines Regelungskonzepts zur Regelung der Entwicklung der Behälterblase.

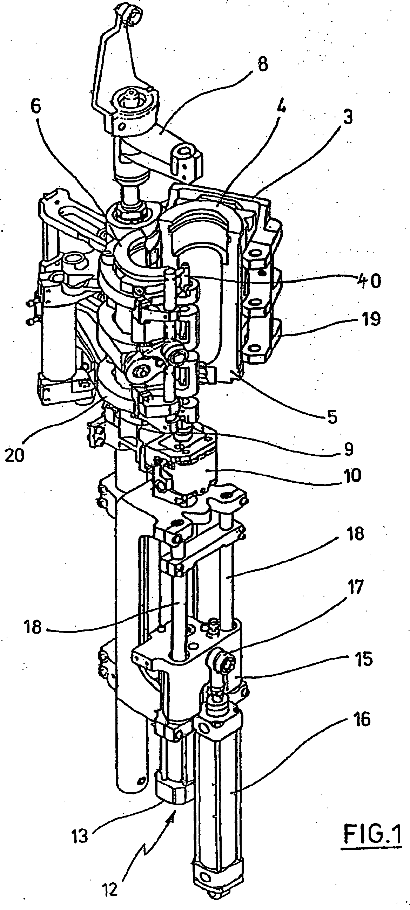

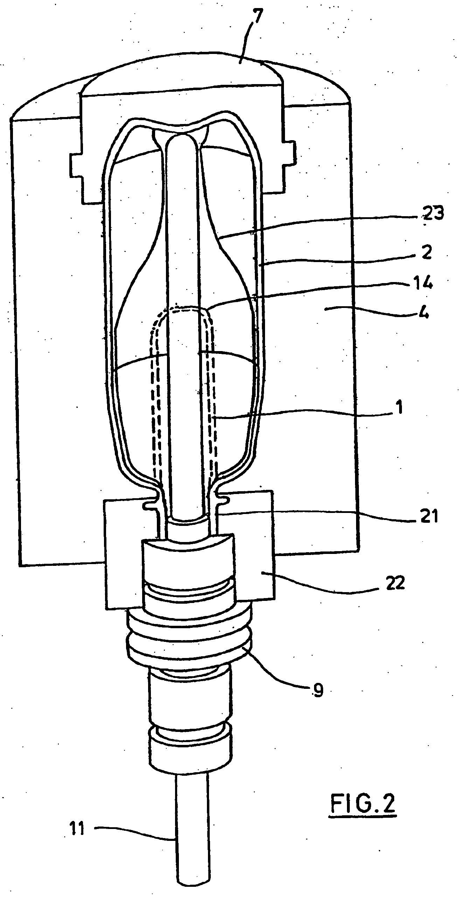

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalab des Transportdornes (9) ein Anschlußkolben (10) angeordnet, der dem Vorformling (1) Druckluft zuführt und gleichzeitig eine Aabdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

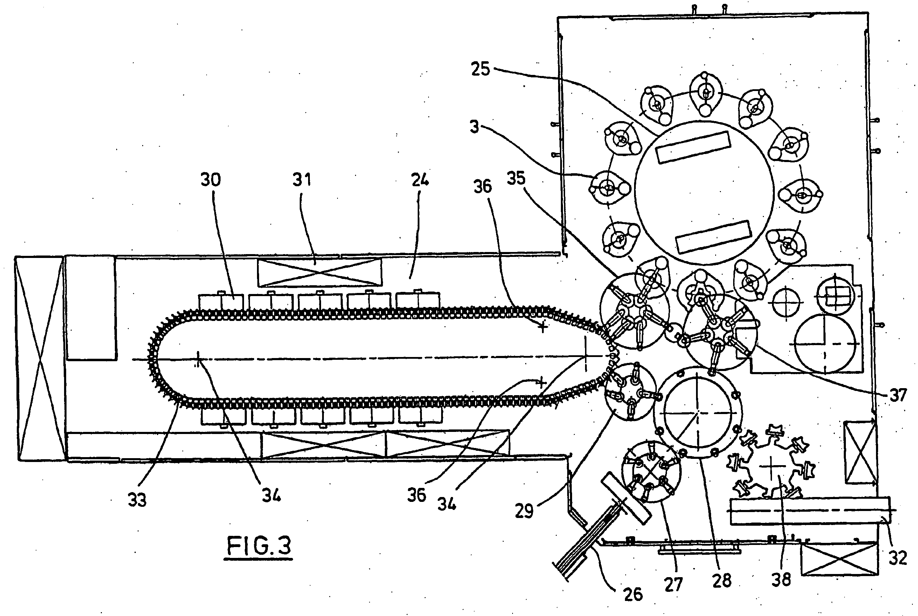

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

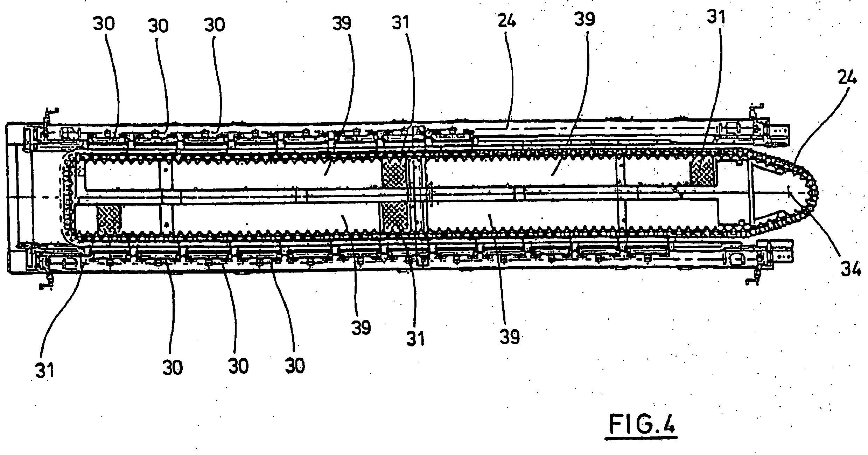

In der in Fig. 4 dargestellten modifizierten Heizstrecke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

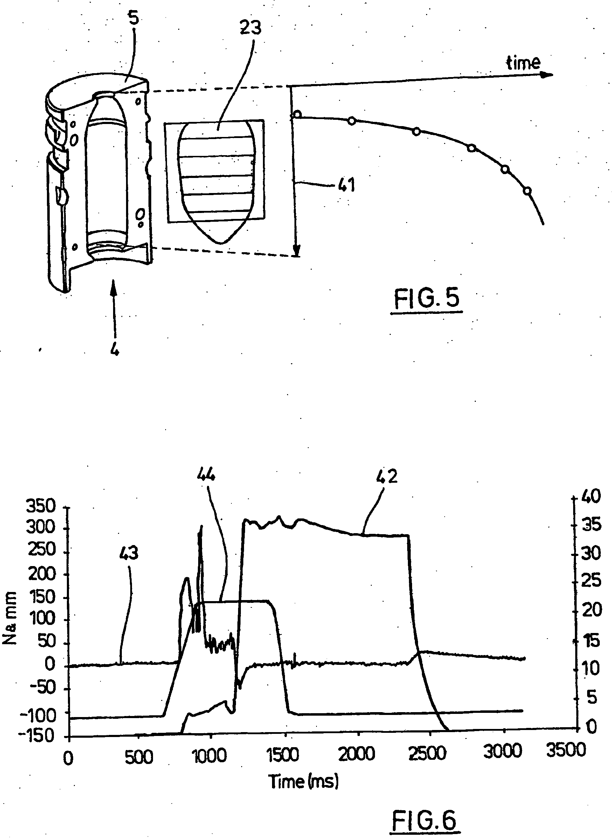

Fig. 5 zeigt in einer schematischen Darstellung die Zuordnung einer Formhälfte (5) und einer Behälterblase (23). Die Behälterblase (23) entwickelt sich während des Blasvorganges in Richtung einer Behälterlängsachse (41) sowie quer zur Behälterlängsachse (41). Als Folge der Expansion der Behälterblase (23) quer zur Behälterlängsachse (41) legt sich die Behälterblase (23) an die Innenwand der Blasform (4) an. Die Anlage beginnt typischerweise in einem dem Mündungsabschnitt (21) des Behälters (2) zugewandten Bereich der Blasform (4) und schreitet dann in Richtung auf das Bodenteil (7) fort. Fig. 5 veranschaulicht zu verschiedenen Zeitpunkten den Fortschritt der Anlage der Behälterblase (23) an der Blasform (4).

Fig. 6 veranschaulicht in einem Diagram die Zuordnung eines zeitlichen Blasdruckverlaufes (42), einer Reckkraftentwicklung (43) sowie einer Reckstangenpositionierung (44). Die Skalierung der zeitachse erfolgt hierbei in Millisekunden und die Amplitudenwerte sind in Bar, Newton bzw. Millimeter skaliert.

Fig. 6 veranschaulicht, daß hinsichtlich der Positionierung der Reckstange (11) diese zunächst im wesentlichen ohne Entwicklung einer Reckkraft in den Vorformling (1) eingefahren wind. Nach einer Anlage der Reckstange (11) am Boden des Vorformlings (1) wird dieser gereckt und es erfolgt eine vergleichsweise große Entfaltung der Reckkraft. Nach einer Beendigung der Längsreckung resultiert die verbleibende Reckkraft aus der Stabilisierung des Vorformlings in der gereckten Positionierung unter Berücksichtigung von elastischen Rückstellkräften innerhalb des Materials des Vorformlings. Der Blasdruckverlauf (42) zeigt die Unterteilung in eine Vorblasphase während der Durchführung des Reckvorganges und in eine Hauptblasphase nach einem wesentlichen Abschluß des Reckvorganges.

Die Anlage der Behälterblase (23) an der Blasform (4) kann beispielsweise unter Verwendung von berührungssensitiven Sensoren erfaßt werden. Ebenfalls ist eine berührungslose Detektion beispielsweise über eine elektrische Feldmessung oder über optische Sensoren möglich. Zusätzliche Meßinformationen werden durch die Erfassung des Druckverlaufes, des der Behälterblase (23) zugeführten Gasvolumens, der Reckgeschwindigkeit, der Reckkraft oder der Temperatur im Material des umzuformenden Vorformlings bereitgestellt. Es können wahlweise ein oder mehrere der oben aufgeführten Parameter ausgewertet werden. Die meßtechnische Erfassung der oben erwähnten Parameter beinhaltet ebenfalls eine indirekte Ermittlung der obigen Parameter durch die meßtechnische Erfassung eines den obigen Parametern zuordbaren Hilfsparameters und eine entsprechende Umrechnung.

Unter Verwendung der bereitgestellten Meßinformationen ist es insbesondere möglich, die dem Material während der Blasverformung zugeführte Umformungsarbeit bzw. Umformungsenergie zu ermitteln.

Gemäß einer bevorzugten Ausführungsform werden die gemessenen oder aufgrund von Messungen ermittelten Parameter, die die Entwicklung der Behälterblase (23) charakterisieren, einem regelungstechnischen Model zugeführt und hier in geeigneter Art und weise zur Generierung von Stellgrößen ausgewertet. Vorzugsweise wird ein Recksystem verwendet, bei dem die Reckgeschwindigkeit und/oder die Reckstangenpositionierung und/oder die Reckkraft steuerbar bzw. regelbar sind. Verwendbar sind beispielsweise Recksysteme mit Kugelgewindespindeln, geregelte pneumatische Recksysteme oder Recksystem auf Basis von elektrischen Linearmotoren oder Servomotoren.

Gemäß einem Ausführungsbeispiel ist es möglich, die Geschwindigkeit der Blasenentwicklung zu erfassen und beispielsweise bei einer zu schnellen Blasenentwicklung die Geschwindigkeit des Reckvorganges zu erhöhen, damit die Reckstangenpositionierung der Blasenentwicklung folgen kann und hierdurch eine Führung und Zentrierung der sich entwickelnden Behälterblase (23) durch die Reckstange (11) gewährleistet ist.

Gemäß einer anderen Ausführungsform ist es möglich, bei einer zu geringen Entwicklungsgeschwindigkeit der Behälterblase (23) die Reckgeschwindigkeit zu vermindern und hiedurch eine vorgegebene zeitliche Zuordnung von Quer- und Längsreckung zu realisieren.

Gemäß einer weiteren Ausführungsform wird die Position der Reckstange (11) gemessen und die Blasdruckzufuhr gesteuert. Dies kann beispielsweise unter Verwendung eines Proportionalventiles erfolgen. Gemäß einem anderen Ausführungsbeispiel wird nicht der Blasdruck, sondern das der sich entwickelnden Behälterblase (23) zugeführte Volumen an Blasluft vorgegeben.

Gemäß einem anderen Ausführungsbeispiel wird die Reckkraft gemessen. Vermindert sich die Recckraft bei einer vorgegebenen Reckgeschwindigkeit, so kann hieraus geschlossen werden, daß eine zu schnelle Entwicklung der Behälterblase (23) vorliegt und die Längsreckung zumindest nur noch teilweise durch die Reckstange (11) und zumindest teilweise durch den Innendruck in der Behälterblase (23) erfolgt. Bei einem Erkennen eines derartigen Zustandes kann das pro Zeiteinheit zugeführte Volumen an Blasgas reduziert werden. Umgekehrt kann bei einem Anstieg der Reckkraft, die auf eine zu geringe Entwicklungsgeschwindigkeit der Behälterblase (23) zurückzuführen ist, der Zustrom an Blasgas erhöht werden.

Gemäß einer weiteren bevorzugten Ausführungsform umfaßt das vorstehend bereits erwähnte regelungstechnische Model einen mehrdimensionalen Parameterraum von Sollwerten. So lange die sich ergebenden Istwerte innerhalb eines entsprechenden mehrdimensionalen Zielraumes liegen, kann auf eine optimale Prozeßführung geschlossen werden. Verläßt mindestens einer der betreffenden Parameter den Sollwertraum, ist eine Korrektur mindestens einer der zu Verfügung stehenden Stellgrößen erforderlich.

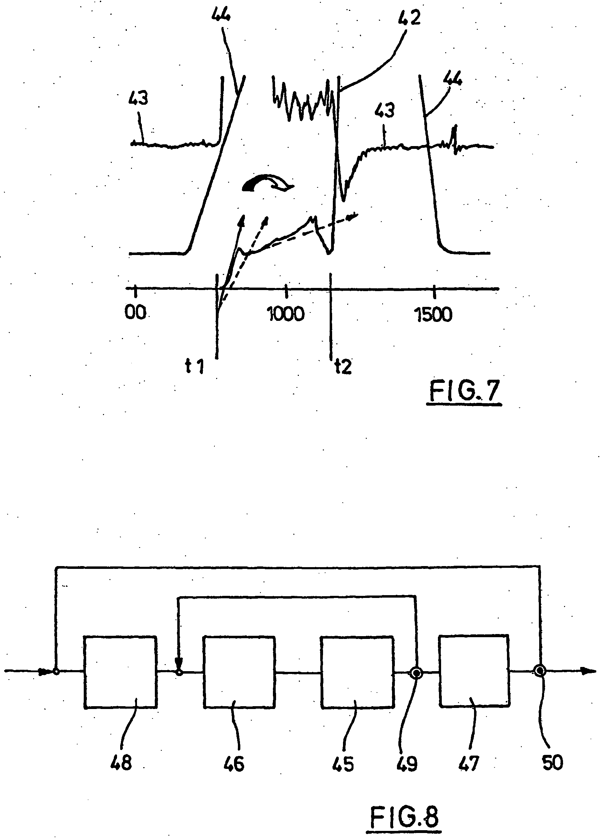

Fig. 7 veranschaulicht für die Vorblasphase, die zwischen den Zeitpunkten t1 und t2 liegt, mögliche Variationen der Druckanstiegsgeschwindigkeit durch geeignete Stellgrößenvariationen. Das Intervall zwischen t1 und t2 hat typischerweise eine Dauer von 50 bis 100 Millisekunden. Die Beeinflussung der Blasenentwicklung erfolgt durch die zwei dargestellten Varianten der Steigung des Blasdruckverlaufes (42) während der Durchführung der ersten Phase des Reckvorganges bzw. nach einem ersten Druckaufbau.

Fig. 8 zeigt schematisch und in einer stark vereinfachten Ausführungsform einen möglichen Regelungskreis zur Beeinflussung der Entwicklung der Behälterblase (23). Im dargestellten Ausführungsbeispiel liegt eine zweischleifige Kaskadenregelung vor. In einem inneren Regelkreis ist hierbei ein Volumen (45) der Behälterblase (23) berücksichtigt, das durch eine Blasgaszufuhr (46) beeinflußt wird. Im äußeren Regelkreis ist die Formanlage (47) der Behälterblase (23) berücksichtigt, die zusätzlich über das Recksystem (48) beeinflußt wird. Das tatsächliche Regelungssystem ist aufgrund der vorliegenden komplexen und zum Teil nicht linearen Zusammenhänge der einzelnen Regel- und Stellgrößen wesentlich komplexer.

Die Erfassung der oben erwähnten Meßgrößen kann beilspielsweise unter Verwendung eines Flußsensors (49) erfolgen, dessen Meßwert in das sich ergebende Volumen umgerechnet wird und die Formanlage kann unter Verwendung eines Positionssensors (50) erfaßt werden.

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) durch Blasdruckeinwirkung in den Behälter umgeformt wird, wobei während der Umformung des Vorformlings (1) in den Behälter (2) innerhalb der Blasform zur Überwachung der Entwicklung der Behälterblase mindestens ein die Umformung charakterisierender Parameter gemessen und von einer Steuereinrichtung ausgewertet wird und in Abhängigkeit von dieser Auswertung der Entwicklung der Behälterblase mindestens eine den Umformungsvorgang beeinflussende Stellgröße innerhalb eines geschlossenen Regelkreises zum Angleichen des gemessenen Parameters an einen zugehörigen Sollwert verändert wird, **dadurch gekennzeichnet, daß** ein Anliegen einer sich entwickelnden Behälterblase (23) an eine Innenseite der Blasform (4) mindestens zeitweise und mindestens abschnittweise gemessen wird.

2. Verfahren nach Anspruch 1, **dadurch gekennzeichnet, daß** eine Position der Reckstange (11) gemessen wird.

3. Verfahren nach einem der Ansprüche 1 oder2, **dadurch gekennzeichnet, daß** eine Geschwindigkeit der Reckstange (11) gemessen wird.

4. Verfahren nach einem der Ansprüche 1 bis 3, **dadurch gekennzeichnet, daß** eine Reckkraft gemessen wird.

5. Verfahren nach einem der Ansprüche 1 bis 3, **dadurch gekennzeichnet, daß** ein Blasdruck gemessen wird.

6. Verfahren nach einem der Ansprüche 1 bis 3, **dadurch gekennzeichnet, daß** ein Blasgasvolumen gemessen wird.

7. Verfahren nach einem der Ansprüche 1 bis 6, **dadurch gekennzeichnet, daß** der Parameter entsprechend einem zeitlich veränderlichen Sollwertprofil geregelt wird.

8. Verfahren nach einem der Ansprüche 1 bis 7, **dadurch gekennzeichnet, daß** die Anlage der Behälterblase (23) an der Blasform (4) geregelt wird.

9. Verfahren nach einem der Ansprüche 1 bis 8, **dadurch gekennzeichnet, daß** die Position der Reckstange (11) geregelt wird.

10. Verfahren nach einem der Ansprüche 1 bis 8, **dadurch gekennzeichnet, daß** die Geschwindigkeit der Reckstange (11) geregelt wird.

11. Verfahren nach einem der Ansprüche 1 bis 10, **dadurch gekennzeichnet, daß** die Reckkraft geregelt wird.

12. Verfahren nach einem der Ansprüche 1 bis 10, **dadurch gekennzeichnet, daß** der Blasdruck geregelt wird.

13. Verfahren nach einem der Ansprüche 1 bis 10, **dadurch gekennzeichnet, daß** das Blasgasvolumen geregelt wird.

14. Verfahren nach einem der Ansprüche 1 bis 13, **dadurch gekennzeichnet, daß** als Stellgröße die Reckgeschwindigkeit verwendet wird.

15. Verfahren nach einem der Ansprüche 1 bis 13, **dadurch gekennzeichnet, daß** als Stellgröße die Reckstangenposition verwendet wird.

16. Verfahren nach einem der Ansprüche 1 bis 13, **dadurch gekennzeichnet, daß** als Stellgröße die Reckkraft verwendet wird.

17. Verfahren nach einem der Ansprüche 1 bis 13, **dadurch gekennzeichnet, daß** als Stellgröße der Blasdruck verwendet wird.

18. Verfahren nach einem der Ansprüche 1 bis 13, **dadurch gekennzeichnet, daß** als Stellgröße das Blasgasvolumen verwendet wird.

19. Verfahren nach einem der Ansprüche 1 bis 18, **dadurch gekennzeichnet, daß** der Meßwert einem regelungstechnischen Model zugeführt wird, das die Stellgröße generiert.

20. Vorrichtung zur Blasformung von Behältern (2) aus einem thermoplastischen Material, die mindestens eine entlang eines Transportweges eines Vorformlings (1) angeordnete Heizstrecke (24) und eine mit einer Blasform (4) versehene Blasstation (3) aufweist, wobei mindestens ein Sensor zur Erfassung mindestens eines die Umformung des Vorformlings (1) in den Behälter (2) charakterisierenden Parameters an eine Steuereinrichtung angeschlossen ist, die eine Auswertungseinheit für diesen Parameter aufweist und die mindestens eine den Umformungsvorgang beeinflussende Stellgröße generiert und die in einem geschlossenen Regelkreis zur Anpassung des gemessenen Parameters an einen zugehörigen Sollwert angeordnet ist, wobei der Sensor angeordnet und ausgebildet ist zur Erfassung der Entwicklung der Behälterblase innerhalb der Blasform und wobei die Steuereinrichtung zur Auswertung der Entwicklung der Behälterblase ausgebildet ist, nämlich **dadurch gekennzeichnet, daß** der Sensor ein Anliegen einer sich entwickelnden Behälterblase (23) an eine Innenseite der Blasform (4) mindestens zeitweise und mindestens abschnittweise messend ausgebildet ist.

## Claims

1. A method for the blow moulding of containers (2) wherein, after having been conditioned thermally along a transport path in the area of a heating section (24), a preform (1) made of a thermoplastic material is moulded in a blow mould (4) by the action of blowing pressure to form the container, wherein, while the preform (1) is moulded in the blow mould to form the container (2), at least one parameter characterising the moulding operation is measured and evaluated by a control unit to monitor the development of the container bubble and that, depending on this evaluation of the development of the container bubble, at least one control variable that has an effect on the moulding operation is changed in a closed control loop to adjust the measured parameter to an associated desired value, **characterised in that**
an abutment of a developing container bubble (23) against the inner side of the blow mould (4) is measured at least at certain times and at least in certain sections.

2. The method according to Claim 1, **characterised in that** a position of the stretch forming bar (11) is measured.

3. The method according to any one of Claims 1 or 2, **characterised in that** a velocity of the stretch forming bar (11) is measured.

4. The method according to any one of Claims 1 to 3, **characterised in that** a stretch forming force is measured.

5. The method according to any one of Claims 1 to 3, **characterised in that** a blowing pressure is measured.

6. The method according to any one of Claims 1 to 3, **characterised in that** a blowing gas volume is measured.

7. The method according to any one of Claims 1 to 6, **characterised in that** the parameter is controlled according to a desired value profile that is variable over time.

8. The method according to any one of Claims 1 to 7, **characterised in that** the abutment of the container bubble (23) against the blow mould (4) is controlled.

9. The method according to any one of Claims 1 to 8, **characterised in that** the position of the stretch forming bar (11) is controlled.

10. The method according to any one of Claims 1 to 8, **characterised in that** the velocity of the stretch forming bar (11) is controlled.

11. The method according to any one of Claims 1 to 10, **characterised in that** the stretch forming force is controlled.

12. The method according to any one of Claims 1 to 10, **characterised in that** the blowing pressure is controlled.

13. The method according to any one of Claims 1 to 10, **characterised in that** the blowing gas volume is controlled.

14. The method according to any one of Claims 1 to 13, **characterised in that** the stretch forming velocity is used as control variable.

15. The method according to any one of Claims 1 to 13, **characterised in that** the position of the stretch forming bar is used as control variable.

16. The method according to any one of Claims 1 to 13, **characterised in that** the stretch forming force is used as control variable.

17. The method according to any one of Claims 1 to 13, **characterised in that** the blowing pressure is used as control variable.

18. The method according to any one of Claims 1 to 13, **characterised in that** the blowing gas volume is used control variable.

19. The method according to any one of Claims 1 to 18, **characterised in that** the measurement value is supplied to a technical control model which generates the control variable.

20. A device for the blow moulding of containers (2) made of a thermoplastic material, the device comprising at least one heating section (24) arranged along a transport path of a preform (1) and a blowing station (3) provided with a blow mould (4), wherein at least one sensor for registering at least one parameter characterising the operation of moulding the preform (1) to form the container (2) is connected to a control unit which comprises an evaluation unit for this parameter and which generates at least one control variable having an effect on the moulding operation and which is arranged in a closed control loop for adjusting the measured parameter to an associated desired value, wherein the sensor is arranged and designed to register the development of the container bubble in the blow mould and wherein the control unit is designed to evaluate the development of the container bubble,
**characterised in that**
the sensor is designed to measure an abutment of a developing container bubble (23) against an inner side of the blow mould (4) at least at certain times and at least in certain sections.

## Revendications

1. Procédé de moulage par soufflage de récipients (2) dans le cadre duquel une préforme (1) en un matériau thermoplastique, après un conditionnement thermique le long d'un parcours dans une zone de chauffage (24), est transformée à l'intérieur d'un moule de soufflage (4) en un récipient sous l'action d'une pression de soufflage, un paramètre au moins caractérisant le formage étant, pendant le formage du récipient (2) à partir de la préforme (1) à l'intérieur du moule de soufflage, mesuré et interprété par un dispositif de commande dans le but de surveiller l'évolution de la bulle dans le récipient, et une grandeur de commande au moins influant sur le processus de formage étant, en fonction de cette interprétation de l'évolution de la bulle, modifiée à l'intérieur d'une boucle d'asservissement fermée pour aligner le paramètre mesuré sur une valeur de consigne correspondante, **caractérisé en ce qu'**un contact entre une bulle (23) en croissance d'un récipient en formation et une face interne du moule de soufflage (4) est mesuré au moins par intermittence et au moins par endroit.

2. Procédé selon la revendication 1, **caractérisé en ce qu'**une position de la barre d'étirage (11) est mesurée.

3. Procédé selon l'une des revendications 1 ou 2, **caractérisé en ce qu'**une vitesse de la barre d'étirage (11) est mesurée.

4. Procédé selon l'une des revendications 1 à 3, **caractérisé en ce qu'**une force d'étirage est mesurée.

5. Procédé selon l'une des revendications 1 à 3, **caractérisé en ce qu'**une pression de soufflage est mesurée.

6. Procédé selon l'une des revendications 1 à 3, **caractérisé en ce qu'**un volume de gaz de soufflage est mesuré.

7. Procédé selon l'une des revendications 1 à 6, **caractérisé en ce que** le paramètre est asservi à un profil de valeur de consigne variable dans le temps.

8. Procédé selon l'une des revendications 1 à 7, **caractérisé en ce que** le contact entre la bulle (23) du récipient en formation et le moule de soufflage (4) est asservi.

9. Procédé selon l'une des revendications 1 à 8, **caractérisé en ce que** la position de la barre d'étirage (11) est asservie.

10. Procédé selon la revendication 1 à 8, **caractérisé en ce que** la vitesse de la barre d'étirage (11) est asservie.

11. Procédé selon l'une des revendications 1 à 10, **caractérisé en ce que** la force d'étirage est asservie.

12. Procédé selon l'une des revendications 1 à 10, **caractérisé en ce que** la pression de soufflage est asservie.

13. Procédé selon l'une des revendications 1 à 10, **caractérisé en ce que** le volume de gaz de soufflage est asservi.

14. Procédé selon l'une des revendications 1 à 13, **caractérisée en ce que** la vitesse d'étirage est utilisée comme grandeur de commande.

15. Procédé selon l'une des revendications 1 à 13, **caractérisée en ce que** la position de la barre d'étirage est utilisée comme grandeur de commande.

16. Procédé selon l'une des revendications 1 à 13, **caractérisé en ce que** la force d'étirage est utilisée comme grandeur de commande.

17. Procédé selon l'une des revendications 1 à 13, **caractérisé en ce que** la pression de soufflage est utilisée comme grandeur de commande.

18. Procédé selon l'une des revendications 1 à 13, **caractérisé en ce que** le volume de gaz de soufflage est utilisé comme grandeur de commande.

19. Procédé selon l'une des revendications 1 à 18, **caractérisé en ce que** la valeur mesurée est transmise à un modèle d'asservissement qui génère la grandeur de commande.

20. Dispositif de moulage par soufflage de récipients (2) en un matériau thermoplastique présentant au moins une zone de chauffage (24) agencée le long d'un parcours d'une préforme (1) et une station de soufflage (3) munie d'un moule de soufflage (4), un détecteur au moins pour la saisie d'au moins un paramètre caractérisant la transformation de la préforme (1) en un récipient (2) étant branché sur un dispositif de commande, lequel présente une unité d'évaluation dudit paramètre et génère au moins une grandeur de commande influant sur le processus de formage et lequel est agencé à l'intérieur d'une boucle d'asservissement fermée pour aligner le paramètre mesuré sur une valeur de consigne correspondante, le détecteur étant conçu et agencé pour détecter l'évolution de la bulle dans le récipient à l'intérieur du moule de soufflage, et le dispositif de commande étant conçu pour évaluer l'évolution de la bulle dans le récipient, **caractérisé en ce que** le détecteur est conçu pour mesurer au moins par intermittence et au moins par endroit un contact entre une bulle (23) en croissance d'un récipient en formation et une face interne du moule de soufflage (4).
